# EUROPEAN PATENT APPLICATION

(11) **EP 3 859 619 A1**
(43) Date of publication of application: **04.08.2021**
(21) Application number: 20154098.6
(22) Date of filing: 28.01.2020
(51) Int. Cl.: G06Q 10/06

(54) **METHOD FOR GENERATING A PRODUCTION SCHEDULE FOR THE OPERATION OF A NUMBER OF RESOURCES**

(71) Applicant: Siemens Corporation, Princeton NJ 08540 (US); Siemens Aktiengesellschaft, 80333 München (DE)
(72) Inventor: FETZER, Karl, Churchville, PA Pennsylvania 18966-1151 (US); FINK, Rafael, 81829 München (DE); HAKENBERG, Mathias, Plainsboro, NJ New Jersey 08536 (US); PESCHKE, Jörn, 90489 Nürnberg (DE); SCHNITTGER, Jens, 91475 Lonnerstadt (DE)
(74) Representative: Maier, Daniel Oliver

(57) **Abstract**

The present invention discloses a method for generating a production schedule for the operation of a number of resources involved in a number of production processes, each production process comprising a number of production operations and optionally a number of unproductive operations, said method comprising the steps of:
a) providing a list of all available production resources, such as machines and/or materials,
b) providing a list of production orders including the information of all possible sets of productive operations and logical dependencies between them to produce a requested product,
c) determining a set of unproductive operations that must be considered during the production schedule generation along with the information which production resources are able to execute these unproductive operations and under which circumstances these unproductive operations are required;
d) dispatching the productive operations one after another while additionally checking for the a priori or a posteriori need of unproductive operations and dispatching each of these productive operations and the additionally required unproductive operations explicitly by assigning resource occupation time slots on the corresponding machines under consideration of all logical dependencies and/or material requirements;
e) incorporating that mechanism into a schedule generation scheme that either iteratively takes such dispatching decisions before their actual execution in order to come up with a predictive production schedule or into an ad-hoc dispatching algorithm in which each decision is carried out right away; and
f) executing the production order by operating the number of production processes according to the production schedule.

Therefore, the present invention provides an MES functionality which includes a framework that also accounts for unproductive operations in the scheduling process. This framework approach can be applied to any schedule generation scheme that iteratively constructs the schedule by dispatching one operation after another.

## Description

The present invention relates to a method for generating a production schedule for the operation of a number of resources involved in a number of production processes, each production process comprising a number of production operations and optionally a number of unproductive operations.

In the world of process automation and process monitoring standard automation systems for controlling the widest conceivable variety of machines and plants are state of the art. Such technology covers in particular a broad range of products which are offered by the Siemens Corp. under its SIMATIC® product family with the field of manufacturing operation management (MOM). An extensive line of products for solving the technical tasks in question such as counting, measuring, positioning, motion control, closed-loop control and cam control enhance the performance capabilities of appropriate process controllers. A variety of configurations enable the implementation of flexible machine concepts.

In this context a broad range of IT solutions exist to connect the actual hardware close to the technical and/or logistical process to the application layer of the client driving the installation. Manufacturing execution systems have therefore been developed to meet all of the requirements of a service oriented architecture (SOA) to integrate seamlessly into a totally integrated automation (TIA). A plug & play architecture, in which the individual functions can be configured and easily combined with each other thereby forms the basis for this success thereby simplifying the complex structures of controlling a manufacturing plant or the like.

These demands very often require in the backbone rather complicated and sophisticated software solutions which enable the approach of totally integrated automation. In view of this, the software engineers very often use production modeling software to define the plant model and its standard operating procedures and create the respective new software by means of a high level graphical language which identifies the workflow of activities within the software. Subsequently, this string/term of high level graphical language is translated into a client based software language executable on the machine language level. This translation requires tremendous efforts in programming and need serious testing to check whether the translated program behaves the same as the original string/term of the high level graphical language.

Within this MES environment a software for a detailed production scheduling (PDS) is provided which concerns the sequencing and the timing of production operations on all manufacturing resources. This software has the aim to create an executable and optimized production schedule that will be executed in production . Before the schedule will be computed, the PDS software needs to be fed with the main input from a plant database such as:
a) the plant logical layout and material flow constraints;
b) the equipment and personnel standard production rates;
c) the availability, the calendar and the status fo the equipment and personnel;
d) knowledge on the way of production (recipes, routings, etc.), process and business constraints;
e) the skills provided by the production resources

Together with this information the PDS software builds its internal model of the plant and of the production process within this plant. Subsequently, by applying the scheduling algorithms to this internal plant model of the plant's resources and production process, the PDS software computes an executable production schedule which does not violate any physical, logistical and/or business constraints and which optimizes the manufacturing performance.

Therefore, production scheduling is related to the detailed planning of the production execution phase, i.e. scheduling can be seen as detailed operative production planning. To this end, each single production operation has to be assigned to a timeslot for its execution and furthermore also to the production resources that are needed to carry out the corresponding activity. While the majority of approaches from scientific literature on production scheduling have a restricted focus on scheduling only productive activities (e.g. drilling holes, assembly of two different parts, etc.), it may be necessary to also account for unproductive operations like logistic processes that are required in between two productive operations in practical applications.

There are many different types of unproductive operations that can occur during the production process. Examples are:
a) Setup of machines: Setup processes can occur due to several circumstances, e.g. need for changing the tooling of a machine or need for cleaning a machine, etc.
b) Transport of products: Transition process of a product to get from one location to another
c) Loading (and unloading) of products: Transition process to load a product from a transportation device into a machine so it can be processed there (unloading vice versa), etc.

It is worthwhile noting that, in general, the need for executing an unproductive operation cannot be determined a priori, but only becomes apparent "online", i.e. during the course of the planning process. Consequently, unproductive operations are generally not part of the bill of process (BoP). When considering, for example, the tooling setup of a machine, only if the sequence of operations is known that are assigned to a machine, it can be determined whether a tool change (i.e. setup) operation is required in-between two consecutive productive operations. However, the operation sequence on a machine is the result of the planning phase itself, hence, it is not clear a priori how many setup operations are required and when they have to be executed during the production process of a product. The same is true for transporting, loading and unloading activities. If operations can be executed on several (multi-purpose) machines, it is not determined a priori whether the next operation will be executed on the same machine again (i.e. no transport needed) or if the product needs to be transported to another machine for further processing.

The focus application area of the present invention is the highly automated production. This type of production typically involves robots, and sometimes robots that are able to perform both productive and unproductive operations (e.g. assembly and transport). Therefore, the requirement to incorporate unproductive operations into the scheduling process also needs to be considered in the context of such dual-role resources. Otherwise, it would be impossible to guarantee that the derived production schedule is truly executable, because resource conflicts would appear for such machines whenever they are needed at the same time for productive operations (scheduled) and unproductive operations (not scheduled).

It is therefore the object of the present invention to provide a method for generating a production schedule for the operation of a number of resources involved in a number of production processes wherein the production schedule is enabled to consider the occurrence of unproductive operations required in the aftermath of and/or before a certain production operation.

This objective is achieved according to the present invention by a method for generating a production schedule for the operation of a number of resources involved in a number of production processes, each production process comprising a number of production operations and optionally a number of unproductive operations, said method comprising the steps of:
a) providing a list of all available production resources, such as machines and/or materials,
b) providing a list of production orders including the information of all possible sets of productive operations and logical dependencies between them to produce a requested product,
c) determining a set of unproductive operations that must be considered during the production schedule generation along with the information which production resources are able to execute these unproductive operations and under which circumstances these unproductive operations are required;
d) dispatching the productive operations one after another while additionally checking for the a priori or a posteriori need of unproductive operations and dispatching each of these productive operations and the additionally required unproductive operations explicitly by assigning resource occupation time slots on the corresponding machines under consideration of all logical dependencies and/or material requirements;
e) incorporating that mechanism into a schedule generation scheme that either iteratively takes such dispatching decisions before their actual execution in order to come up with a predictive production schedule or into an ad-hoc dispatching algorithm in which each decision is carried out right away; and
f) executing the production order by operating the number of production processes according to the production schedule.

Therefore, the present invention provides an MES functionality which includes a framework that also accounts for unproductive operations in scheduling. This framework approach can be applied to any schedule generation scheme that iteratively constructs the schedule by dispatching one operation after another. These schedule generation schemes are commonly used in any MES software that provides a scheduling functionality, e.g. rule or event based-based schedule construction algorithms (e.g. as implemented in Siemens scheduling software Preactor). The present method provides a marked gain in the efficiency of the production plan, resulting in better machine usage, higher throughput and reduced makespan - at least with regards to the production execution phase. The explicit consideration of unproductive operations in scheduling also ensures a better transferability of the schedule from the planning to its execution phase (e.g. no risk to run into resource conflicts). A secured executability also ensures that the quality of predictive schedules achieved by advanced optimization can actually be put to use in practice.

In a preferred embodiment of the present invention, the list of possible unproductive operations determines time- and/or resource-consuming operations comprising one or more of the following:
a) tooling tasks for a resource;
b) activating and deactivating of a resource ;
c) set-up operation of resources;
d) transport of products; and
e) loading and/or unloading of products.

In order to generate a production schedule that can be executed automatically without human interaction, for each of the production operations and the unproductive operations a duration and a required amount of material and/or other resources may be determined.

In order to generate the production schedule on the flight with a comparably short time span, it can be foreseen that during the generation phase of the production schedule the availability of the required material and/or resources for the fulfillment of the production operations and unproductive operations is checked in real-time.

Typically , the production schedule may be displayed in an intuitive manner in a Gantt chart.

In view of the fully automated execution of the production processes, it is advantageous when the production operations and the unproductive operations are dispatched using the same mechanism.

Further preferred embodiments of the present invention can be taken from the remaining depending claims.

Preferred examples of the present invention are discussed in detail below with reference to the following drawing which depicts in:
- Figure 1: a schematic overview of a manufacturing execution system and the MES software components incorporated therein;
- Figure 2: a schematic example of a production re-scheduling according to a mixture of scheduling and execution decisions;
- Figure 3: a schematic overview over the scheduling logic for encompassing productive operations with unproductive operations using the same scheduling mechanism;; and
- Figure 4: a schematic overview over created stages a) to h) of the production schedule that is displayed as a Gantt chart.

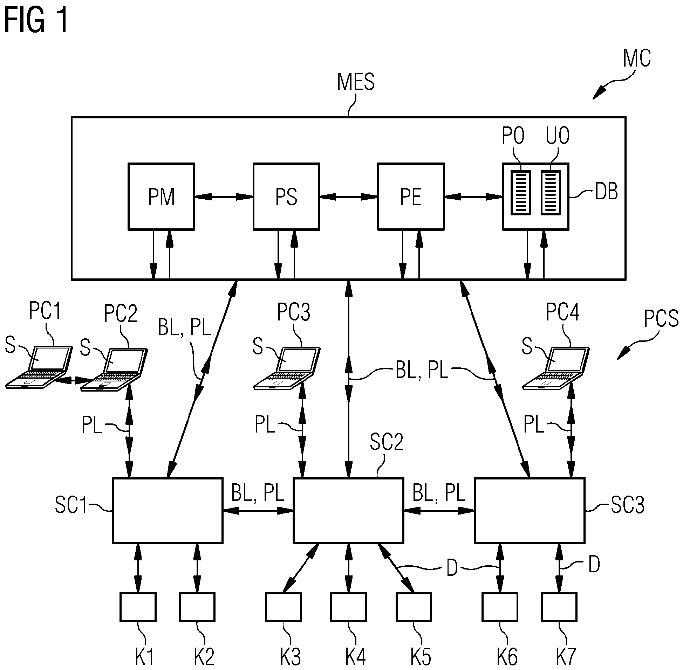

Figure 1 illustrates a schematic overview of a plant control system PCS comprising a manufacturing execution system MES. The system PCS comprises a number of data processing units MC, SC1, SC2, SC3 running a MES software for controlling and/or monitoring a production process operating a number of production resources/components K1 to K7. The production components K1 to K7 can be robots, sensors, actuators, motors, step drives, conveyors, valves, pumps and the like. The data processing units MC, SC1, SC2 and SC3 are network computers which comprise logical units, calculation means, storage means, display means and the like. The data processing units MC, SC1, SC2 and SC3 are connected within a plant network in order to exchange data to the required extent. One of the data processing units, hereinafter referred to a master console MC, is executing the MES software for controlling and monitoring the operation of the plant.

The master console MC comprises in terms of logical units realized by the MES software the following components:
a) optionally a production modeler PM within the MES software enabled to define a plant model of the production process;
b) a production scheduler PS within the MES software enabled to generate an executable production schedule for the execution of the production processes for the production components K1 to K7 related to the plant model of the production processes;
c) a production executor PE within the MES software enabled to execute the production processes following the generated executable production schedule;
d) a data source comprising among others a list of possible production operations PO specified for each of the production components K1 to K7 and a list of possible unproductive operations UO specified for each of the production components K1 to K7, said unproductive operations being linked to follow and/or to precede at least one of the possible production operations during the execution of the number of production processes; and
e) said production scheduler PS further enabled to calculate an amended executable production schedule incorporating the identified production operations PO and the unproductive operations UO paired to the respective production operation PO.

The production modeler PM is enabled to define a business logic BL within a fully graphical environment as fascilitated by the MES software. The business logic BL, when finally generated by the production modeler PM, comprises a plant model of the production processes and the related production operations PO for the production components K1 to K7 in a fully graphical environment. Even for the creation of the business logic BL high-level graphical language is used within the MES software, preferably consistently with the ISA-95 standard. The master console MC further comprises a client application builder CAB within the MES software being enabled to provide a native, WEB based graphical user interface for generating cross-functionality graphic screens S, said screens forming part of the network as presentation clients PC, PC1 to PC4 and displaying data D which is stemming from the production components K1 to K7 and which may be further processed by the MES software

Additionally, the MES software is further enabled to define a presentation logic PL. The presentation logic is provided to operate the cross-functionality graphic screens S with respect to their content of the data D at the presentation clients PC1 to PC4. This presentation logic PL can be therefore developed within the same environment as used to define the business logic BL.

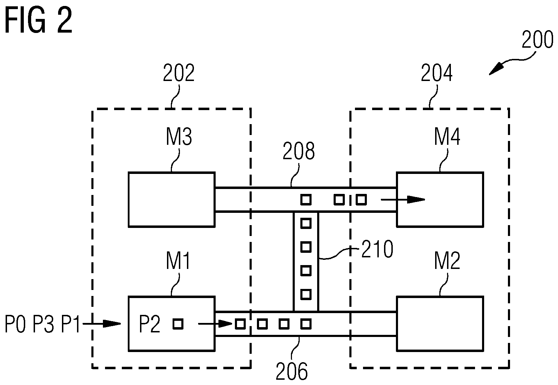

With reference to Figure 2, a schematic overview is shown over a re-scheduling of a production process according to a mixture of scheduling and execution decisions after a disturbance event has been detected. The figure depicts a first production station 202 and a second production station 204 of a production plant 200. With the first production station 202 machine M1 and M3 and with the second production station 204 machines M2 and M4 are engaged. A first conveyor 206 links the machine M1 to the machine M2; a second conveyor 208 links the machine M2 to the machine M4. A deflection conveyor 210 connects the first conveyor 206 to the second conveyor 208 in order to allow the linking of the machine M1 to the machine M4 and/or the linking of the machine M3 to the machine M2.

The production executor PE is now checking the process for the violation of predefined threshold. The data acquired by the PE is therefore specified in order to monitor the normal workflow as given by the production schedule derived from the production scheduler PS. Due to a disturbance occurred (here the decrease of the productivity at the machine M2), the production executor PE now investigates which measures have been defined in a rule table to manage this type of disturbance. Subsequently, the production executor PE identifies an optimal solution to manage the disturbance according to the following decisions:
1. Find a new feasible production sequence: P2, P1, P3, P0 on the machine M1 which is considered as a scheduling decision;
2. Change the conveyor configuration in order to connect M1 to M4 which is considered to be an executions decision;
3. Set production rate to the machine M4 to run at the same production rate of the machine M1 which is considered again an execution decision;
4. Decide to produce now P2 and P1 on the machines M1 and M4 which is considered to be a scheduling decision;
5. Start maintenance at time t₁ on the machine M2 to re-establish its efficiency to its standard level which is considered to be an execution decision;
6. Re-configure at time t₂ the conveyor configuration to re-connect the machine M1 and M2 which is considered again an execution decision; and
7. Produce products P3 and P0 on the machines M1 and M2.

In this approach of combining both scheduling and execution decisions in a single optimization engine which is fully embedded in the real time manufacturing execution system MES guarantees an effective real time management of disturbance events. The MES software comprises a highly effective engine to manage not only a disturbance as it is but to re-schedule the complete production process taking the actual plant conditions including a sudden disturbance event as granted. This approach enables the manufacturing execution system MES and its software, in particular its production detailed scheduler module (the PS), re-define a production process from scratch after a relevant disturbance event has been detected. Unfortunately, this disturbance and opportunity management manages any disturbances during the production process but is not enable to handle the presence of the unproductive operations that are already known prior to the calculation of the production schedule. Typical unproduction operations are those which do not directly contribute to the production of a product, such as immediately required maintenance tasks for a production component/resource, tooling tasks for a production resource, activating or deactivating tasks for a production resource, set-up operations of a production resource, transport of products by a production resources and loading and/or unloading of products.

Beside this disturbance and opportunity management, the present invention now describes an additional MES functionality which includes a framework that also accounts for unproductive operations UO in the scheduling. This framework approach can be applied to any schedule generation scheme that iteratively constructs the schedule by dispatching one operation after another. These schedule generation schemes are commonly used in the MES software that provides a scheduling functionality, e.g. rule or event based-schedule construction algorithms (e.g. as implemented in Siemens scheduling software Preactor).

The enhanced MES scheduling functionality extends now the existing schedule generation schemes used in MES scheduling functions in such a way that they can also cope with any type of unproductive operations UO that might be required by the respective production process. The core of conventional schedule generation schemes comprises the scheduling of one production operation PO after another in order to iteratively construct an overall production schedule. For this purpose, in the database a list of resource-specific production operations are given that can be selected according to a production recipe (Production segment).

It has to be stated that there are approaches in the scientific literature on production scheduling that consider setup operations or general time buffers for transportation efforts within such schedule generation schemes. Yet, the approach presented in the following is distinguished from these existing methodologies by avoiding fixed, context independent time buffers and by offering a comprehensive and generic treatment since the present framework according to the present invention is enabled to incorporate any kind of unproductive operations UO depending on the needs of the scheduling use case at hand.

Schedule generation schemes need a lot of data input in order to be able to iteratively construct a production schedule. The most important data source is a system that holds or implicitly defines the BoP. Implicit definition means that possible executable forms of the BoP are determined as solutions of specified sequencing and precedence constraints (in contrast to explicit static definitions of all executable BoPs, stored for instance in an MES system). This information can be calculated even for very dynamic production environments using skill matching and constraint programming.

In any case it can thus be assumed that there is always a scheduling algorithm capable of determining which productive operation OP can be dispatched next in order to extend an existing partial production schedule. The present methodology requires a second data source providing all required information on the unproductive operations under consideration. In the case of DPPM (Dynamic Production process Management), this methodology (called "unproductive operation data source" in the following) is part of the MES system and its core is the connectivity matrix concept which links specific unproductive operations to specific production operations with the objective that said unproductive operations UO being linked to follow or precede at least one of the possible production operations during the execution of the number of production processes.

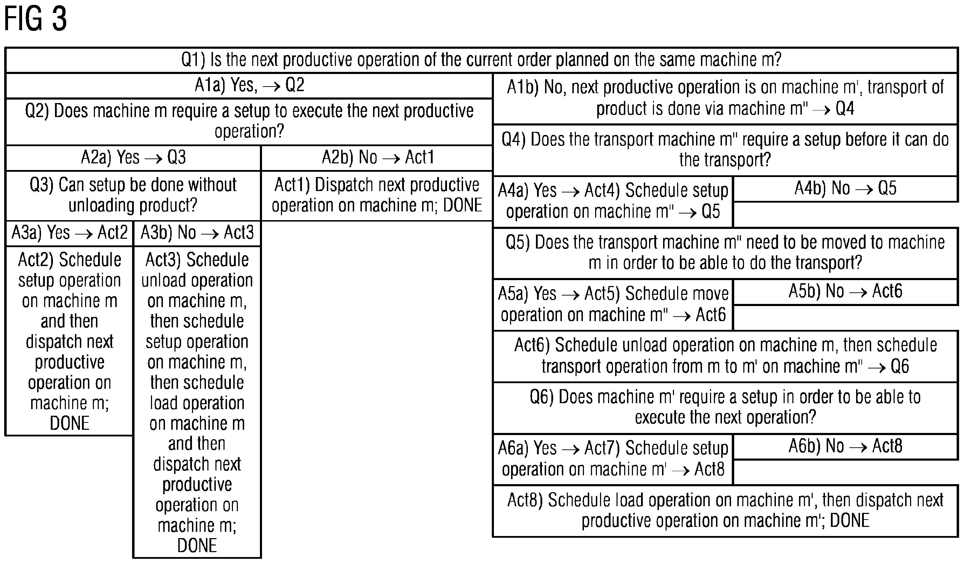

Generally, the concept to integrate unproductive operations UO into the schedule generation scheme is as follows:
The applied logic can be explained by representing it, on a logical level, in the form of a structured questionnaire as shown in Figure 3. However, it should be clear that the logic is realized as an algorithm implemented within the production scheduler PS (the production scheduling software). In particular, no human input is required, and so the procedure serves as part of a production planning and control system directing the production autonomously and automatically. The questionnaire is evaluated using information from the unproductive operation data source, and the result determines whether it is necessary to insert one or more unproductive operations UO before and/or after a certain productive operation PO, within the current partial schedule. The unproductive operation(s) UO is (are) then handled in the same way as productive operations PO, for instance submitted to a check for resource availability, and scheduled as soon as possible.

The questionnaire needs to also handle precedence relations between unproductive operations UO and needs to reflect the configured unproductive operations UO according to the list of resource-specific possible unproductive operations UO.

In Figure 3, an example for such a structured questionnaire is presented that deals with the situation where the dispatching of an order has already been started. It is then required to add the next productive operation that belongs to this order (similar questionnaires can be formulated analogously for other scenarios, e.g. starting a new order, etc.).

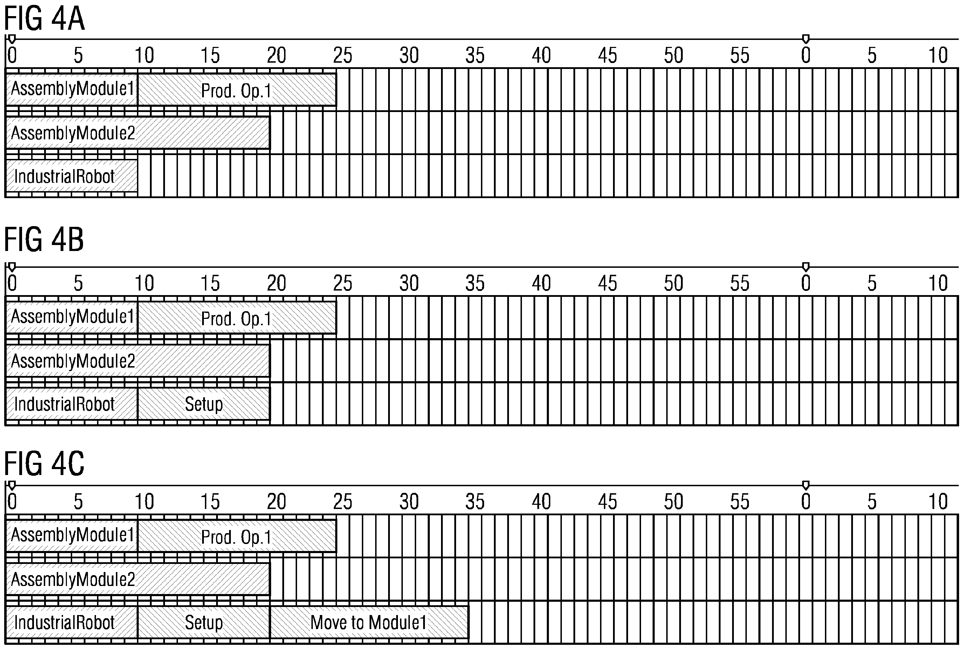

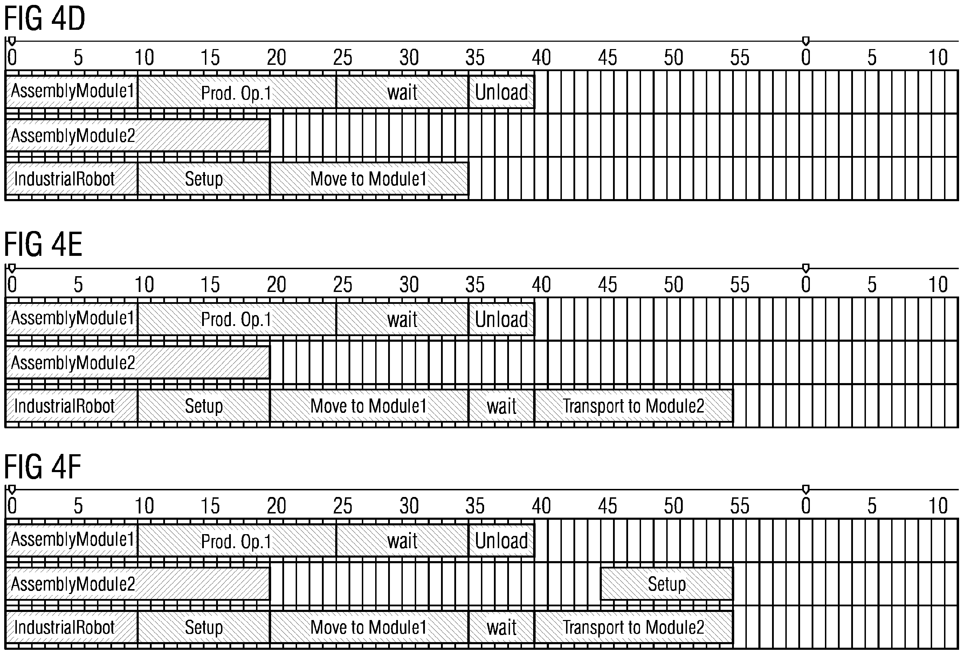

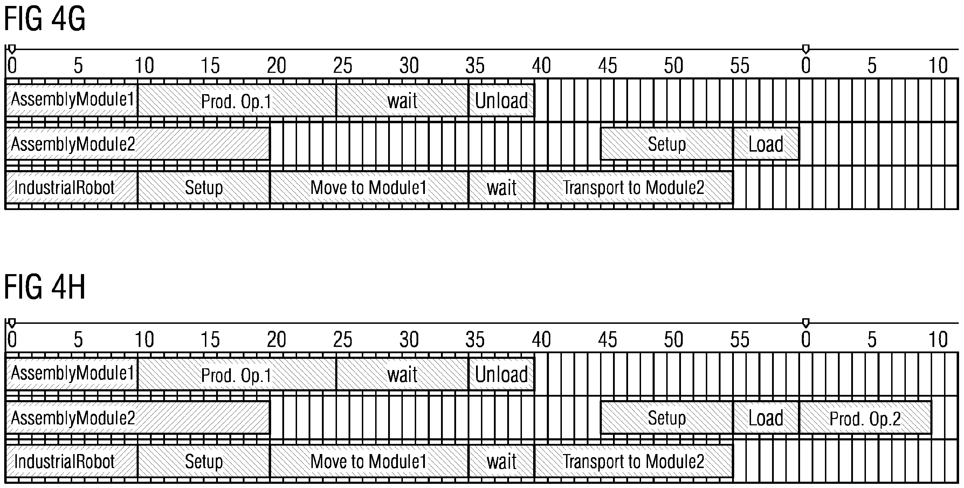

After having introduced the proposed questionnaire methodology, an example will be presented according to the progress of the scheduling activity shown in Figure 4 a) to h) that will clarify how the procedure works in practice.

In the questionnaire of Figure 3, it is assumed that machines can do an unproductive (un)load operation on their own. If this is not the case, one can straightforwardly extend the questionnaire by introducing questions that ask if the (un)load machine requires a setup operation in advance in order to be able to do the (un)load operation and/or if the (un)load machine needs to be moved to the machine. For the sake of simplicity and comprehensibility, this extension has been dropped from the explicit presentation.

When scheduling a specific operation, scheduling rules need to be considered such as, for example, starting as soon as possible. 'Possible' means that all required resources need to be available (i.e. not blocked by other operations and/or products) at the right place and over the complete required time interval. For example, consider Act6) in the above questionnaire: The unload can only be scheduled once the transportation resource m" is ready to receive the product from the unload process of machine m.

Once the currently considered productive operation PO has been scheduled, the procedure can start all over with the next productive operation of interest.

The questionnaire above is just an example and the described work flow should not be regarded as a static standard procedure; for other situations and use cases there might be a need for use case specific adaptations of the questionnaire in order to match the corresponding unproductive operation data source.

It is worthwhile noting that the described framework can be integrated in any scheduling algorithm that is based on a constructive schedule generation scheme. That is, it can be utilized for example in simple priority rule based dispatching algorithms as well as in more complex branch-and-bound based scheduling routines (cf. International Patent Application WO 2018/174940 A1) in which different dispatching alternatives can be enumerated efficiently. This enumeration is not restricted to the different dispatching options for productive operations PO, instead it can/should also comprise the enumeration of different options to execute unproductive operations UO, if such options exist (e.g. different means of transportation).

The example according to Figure 4 a) to h) will be presented for following the described questionnaire. A small production environment is assumed with two static (i.e. non-movable) assembly modules and an industrial robot that can perform productive operations as well as transport operations between the two assembly modules (this means, that we can either think of a moveable gripper of a static robot or we could even consider an AMR, i.e. a moveable robot).

The partial schedule in Figure 4a) represented in the Gantt chart mode shows the starting situation. Already scheduled operations (that are assumed to belong to other orders, for keeping the example simple) are not named explicitly and are represented in light grey color. The dark grey operation "Prod. Op.1" shows the first dispatched productive operation that belongs to the order that is considered in this example. In the case considered, this operation is executed on Assembly Module 1 represented in the first line of the Gantt chart and it starts at the end of the light grey zone. This partial schedule shall now be extended by the next productive operation "Prod. Op.2" that follows the operation "Prod. Op.1" according to the BoP of the ordered product. It needs to be executed on assembly module 2 which is represented in the second line of the Gantt chart.

Following the questionnaire, the answer to question Q1 is "NO" (the next productive operation is not planned on the same machine), so that the algorithm continues with question Q4. Assuming the answer to that question is "YES" (the transport machine requires a setup before being able to perform the unproductive transport operation), the algorithm executes action Act4 and triggers scheduling a setup for the transport machine. The result is shown in the Gantt chart according to Figure 4b).

Continuing with question Q5 and, assuming that the robot is currently not located at assembly module 1, the answer to question Q5 is "YES" and an unproductive movement operation of the robot is scheduled to get the robot to the assembly module 1 from its current location. The resulting partial schedule looks as follows in Figure 4c). The robot is represented in the third line of the Gantt chart.

Following the questionnaire, action Act6 ensues which first schedules an unload operation on assembly module 1. The unload can only be done as soon as the transportation resource (IndustrialRobot) becomes available to receive the product. Hence, the resulting partial schedule is shown in Figure 4d) (also note that assembly module 1 needs to be blocked with an unproductive operation "Waiting time" until the unload operation can start).

Next, action Act6 triggers scheduling the transport operation by which the product is moved to assembly module 2. Similarly to the previous step, the robot needs to wait until the unload is done; during this waiting time the robot cannot do anything else and hence needs to be blocked by scheduling the unproductive operation "Waiting time" (see Figure 4(e)).

The next step in the questionnaire is question Q6. Assuming that assembly module 2 needs an unproductive operation "Tool change" before it can execute the next productive operation for the currently considered order, the answer to question Q6 is "YES". In principle, the required setup operation on assembly module 2 could start directly after the light grey operation on that machine is complete. However, because the current product would not arrive until the end of the "Transport to Module2" operation has completed, scheduling the setup operation too early would unnecessarily block the machine from completing any other operations in the meantime. Since this is undesirable, the setup operation is scheduled such that it starts as late as possible without delaying the further production process of the dark grey order (this is part of the core scheduling algorithms and not of the present procedure extending it). The result is shown in the next Gantt chart according to Figure 4(f).

The final step of the questionnaire is now action Act8. This triggers scheduling a load operation (see Figure 4(g)).

Finally, the next productive operation "Prod. Op.2" is scheduled as shown in the final Gantt chart according Figure 4(h).

This simple example (simple in terms of the machinery and the production processes) clearly shows that logistic processes can severely affect the production process. A scheduling routine that only focuses on productive operations OP or simply integrates time buffers without blocking required resources would perform much worse than the proposed procedure; it would create unnecessary time lags in many cases and negatively impact overall throughput and makespan or might even lead to resource conflicts in the production execution phase.

## Claims

1. A method for generating a production schedule for the operation of a number of resources involved in a number of production processes, each production process comprising a number of production operations and optionally a number of unproductive operations, said method comprising the steps of:
a) providing a list of all available production resources, such as machines and/or materials,
b) providing a list of production orders including the information of all possible sets of productive operations and logical dependencies between them to produce a requested product,
c) determining a set of unproductive operations that must be considered during the production schedule generation along with the information which production resources are able to execute these unproductive operations and under which circumstances these unproductive operations are required;
d) dispatching the productive operations one after another while additionally checking for the a priori or a posteriori need of unproductive operations and dispatching each of these productive operations and the additionally required unproductive operations explicitly by assigning resource occupation time slots on the corresponding machines under consideration of all logical dependencies and/or material requirements;
e) incorporating that mechanism into a schedule generation scheme that either iteratively takes such dispatching decisions before their actual execution in order to come up with a predictive production schedule or into an ad-hoc dispatching algorithm in which each decision is carried out right away; and
f) executing the production order by operating the number of production processes according to the production schedule.

2. The method according to claim 1,
wherein the list of possible unproductive operations determines time- and/or resource-consuming operations comprising one or more of the following:
a) tooling tasks for a resource;
b) activating and deactivating of a resource;
c) set-up operation of resources;
d) transport of products; and
e) loading and/or unloading of products.

3. The method according to claim 1 or 2,
wherein for each of the production operation and the unproductive operations a duration and a required amount of material and/or other resources is determined.

4. The method according to any of the preceding claims,
wherein during the generation phase of the production schedule the availability of the required material and/or resources for the fulfillment of the production operations and unproductive operations is checked in real-time.

5. The method according to any of the preceding claims,
wherein the production schedule is displayed in a Gantt chart.

6. The method according to any of the preceding claims,
wherein the production operations and the unproductive operations are dispatched using the same mechanism.
